(19) Europäisches Patentamt
European Patent Office
Office européen des brevets

(11) **EP 4 106 496 A1**

(12) **EUROPEAN PATENT APPLICATION**

(43) Date of publication:
**21.12.2022 Bulletin 2022/51**

(21) Application number: **22176173.7**

(22) Date of filing: **30.05.2022**

(51) International Patent Classification (IPC):
**H05B 45/3574** $^{(2020.01)}$ **B60Q 11/00** $^{(2006.01)}$
**H05B 47/20** $^{(2020.01)}$

(52) Cooperative Patent Classification (CPC):
**H05B 47/20; B60Q 11/005; H05B 45/3574**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021 IT 202100016070**

(71) Applicants:
• **OSRAM GmbH**
**80807 München (DE)**
• **OSRAM S.P.A. - SOCIETA' RIUNITE OSRAM
EDISON
CLERICI
20126 Milano (MI) (IT)**
Designated Contracting States:
**IT**

(72) Inventors:
• **GREGIANIN, Francesco**
**I-30014 Cavarzere (Venezia) (IT)**
• **BIZZOTTO, Alessandro**
**I-31033 Castelfranco Veneto (Treviso) (IT)**

(74) Representative: **Bosotti, Luciano**
**Buzzi, Notaro & Antonielli d'Oulx S.p.A.
Corso Vittorio Emanuele II, 6
10123 Torino (IT)**

(54) **LOAD-CONTROL DEVICE FOR AUTOMOTIVE LAMPS, AND CORRESPONDING KIT AND METHOD**

(57) A kit for retrofitting with LED lamps (L) motor vehicles equipped with filament lamps comprises a connection device with a first connector (141) configured to be coupled to an electrical-supply source (B, LC) in the vehicle and a second connector (142) configured to be coupled to an automotive LED lamp (L).

A filament lamp (22) is set, along the electrical-supply line (14), between the first connector (141) and the second connector (142) so that, with the first connector (141) coupled to the electrical-supply source (B, LC), the filament lamp (22) provides an electrical load for the electrical-supply source (B, LC).

FIG. 3

**Description**

Technical field

The disclosure relates to load control in lamps in the automotive sector.

One or more embodiments may be used, for example, together with LED lamps used for retrofitting motor vehicles.

Technological background

Motor vehicles of more recent production usually mount LED lights as standard equipment.

A person who possesses a more dated model can install LED lights turning to the so-called aftermarket (in the language currently used in the sector, retrofit LEDs), thus being able to benefit from various advantages of LED lamps.

LED lamps are (much) more efficient than halogen ones; they produce a powerful light beam with the same white colour as solar light, because they have a similar colour temperature. Moreover, they present a longer duration.

It is possible to use retrofit LEDs also for internal lighting of the passenger compartment (for example, for lighting up the dashboard, for the roof lights, or for lighting up the boot); it is also possible to use them for replacing fog lamps.

If the vehicle being retrofitted has available (as is frequently the case) a system for detecting any malfunctioning of lights, replacement of halogen lamps with LED lamps may be the source of problems in so far as the sensors of the on-board diagnostic system are calibrated for "expecting" a passage of current corresponding to that of a halogen light.

LED lamps absorb less power, and this lower absorption may be interpreted by the on-board diagnostic system as a failure.

This may give rise to a failure warning (for example, "burnt-out lamp").

If such a warning may be ignored, very different is the case where the on-board diagnostic system does not simply issue such a warning but, for example, automatically activates a very fast flashing in order to signal the failure in a more evident way, in some cases even switching off the circuit to protect it from damage, erroneously interpreting the event as a failure.

Such a situation may be the source of various problems.

These may range from travelling with the lights turned off to being subject to sanctions for infringing rules that forbid the use of flashing lights other than direction indicators.

For these reasons, there have existed for some time - for example in the context of the standard specification known as CAN-bus (Controller Area Network bus), which was devised to handle communication between systems on board a vehicle, for example for fault detection - solutions that envisage resorting to an electronic "core" (at times also referred to as CAN-bus resistance) having the function, so to speak, of circumventing the on-board diagnostics.

It may, for example, be a simple resistance connected between the (LED) lamp and its connector (possibly integrated in the lamp itself or constituting a separate component) capable of bringing the power absorption of the retrofit LED lamp to the same level of power absorption as the halogen lamp of the original equipment.

Solutions of this type are exposed to drawbacks of various nature.

In particular, there may arise problems of incompatibility with certain diagnostics systems (Body Control Module or BCM).

Object and summary

The object of one or more embodiments is to tackle the problem outlined previously.

According to one or more embodiments, the above object may be achieved thanks to a device having the characteristics recalled in the ensuing claims.

One or more embodiments may regard a corresponding kit, such as a retrofit LED kit for motor vehicles.

One or more embodiments may regard a corresponding method, which may be used, for example, for retrofitting with LED lamps motor vehicles provided with filament lamps, such as halogen lamps.

The claims form an integral part of the technical teachings provided herein in relation to the embodiments.

In solutions according to the examples presented herein, a halogen lamp used instead of an electronic circuit makes it possible to solve the problem outlined above by providing a "universal" solution capable of overcoming possible reasons of incompatibility with the control system (BCM) present on the vehicle.

The examples presented herein envisage replacing an electronic control module (having associated connectors for connection of the lamp to the electrical wiring system of the vehicle) with a module comprising a halogen lamp capable of performing the functions of the electrical circuit, keeping the part regarding the connectors unvaried.

The fact of using as the energy-absorption source a halogen lamp (instead of a system based upon an electrical circuit) facilitates implementation of a "universal" system that can be used with any type of BCM, either of a pulsed type and of current-based type.

Brief description of the annexed drawings

One or more embodiments will now be described, purely by way of non-limiting example, with reference to the annexed figures, wherein:

Figure 1 is a general representation of a conventional load-control device for automotive LED lamps;
Figure 2 is an exploded perspective view of the part of device indicated by the arrow II of Figure 1;
Figure 3 is a general representation of a load-control device for automotive LED lamps according to embodiments of the present disclosure;
Figure 4 is an exploded perspective view of an element represented in Figure 3; and
Figure 5 is an electrical diagram of embodiments of the present disclosure.

If not otherwise indicated, corresponding numbers and symbols in the various figures in general refer to corresponding parts.

The drawings in the figures are such as to illustrate clearly the important aspects of the embodiments and are not necessarily in scale.

The outlines of the elements appearing in the figures do not necessarily represent the limits of extension of the individual element.

Detailed description

In the ensuing description various specific details are illustrated in order to enable an in-depth understanding of various examples of embodiments according to the disclosure. The embodiments may be obtained without one or more of the specific details, or with other methods, components, materials, etc. In other cases, known structures, materials, or operations are not illustrated or described in detail so that the various aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points of the present description do not necessarily refer exactly to one and the same embodiment. Moreover, particular conformations, structures, or characteristics may be combined in any adequate way in one or more embodiments.

The references used herein are provided merely for convenience and hence do not define the sphere of protection or the scope of the embodiments.

It will be appreciated that, for brevity - and unless the context indicates otherwise - parts or elements that are similar are designated in the various drawings by the same reference symbols, without repeating a corresponding description for each figure.

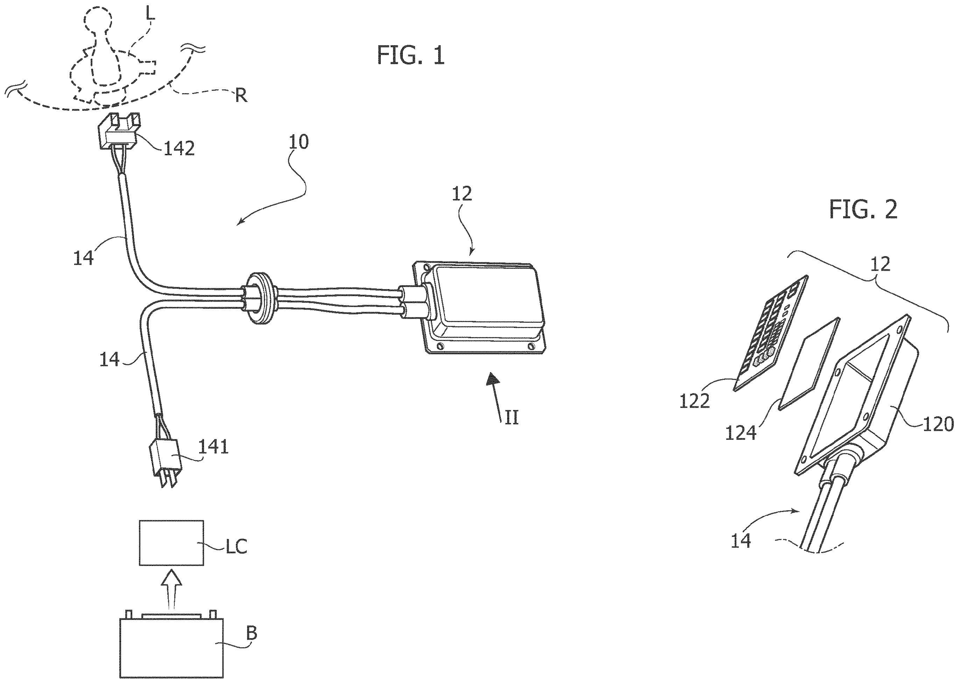

In Figure 1, the reference 10 designates as a whole a device used for connecting up to an electrical supply source, such as a battery B of a vehicle (not visible in the figures), a LED lamp L installed as retrofit to replace a halogen lamp.

It may, for example, be a lamp L mounted in the dish or reflector R of one of the lights (for example, a headlight) of a vehicle not visible as a whole.

As has been said, whereas vehicles such as automobiles of more recent production usually mount LED lights as standard equipment, for a person who possesses a more dated model it is possible to install LED lights as retrofit, it thus being possible to benefit from advantages linked to LED lights, such as higher efficiency, the power and the colour temperature of the light beam emitted, and the longer duration.

The representation of Figure 1 is deliberately simplified and does not highlight in detail various elements such as control of turning-on and turning-off of the lamp L, control of brightness thereof, etc.

These functions may be performed, according to criteria in themselves known, which do not assume specific importance for the purposes of the examples presented herein, by a control system LC that can be viewed as being interposed between the vehicle battery B and the device 10.

The lamp L, which is to be connected to the battery B via the device 10 and the control system LC, may be of any type or model of LED lamp available at the retrofit level: as has already been said, it is possible to use retrofit LEDs also for the internal lighting of the passenger compartment (for example, for lighting up the dashboard, for the roof lights, or for lighting up the boot) or for replacing the fog lamps.

It is assumed that the vehicle undergoing retrofitting is provided (in a way in itself known) with a light-control system LC that includes a module/function for detecting malfunctioning of the lights, for example of the type referred to as "body control module" (BCM), with corresponding sensors calibrated for expecting a passage of supply current, for example, at the level of the current absorbed by the lamp starting from the supply source (battery) B corresponding to that of a halogen light.

The LED lamps such as the lamp L exemplified herein absorb less power than do homologous traditional lamps (halogen lamps, for example). This lower absorption may be interpreted by the on-board diagnostic system as deriving from a fault or failure, with the drawbacks described in the preamble of the present description.

A traditional solution like the one illustrated in Figure 1 tackles this problem by resorting to an electronic core 12 (at times indicated also as CAN-bus resistance), set along the supply line 14 that from the supply source (battery B, via the control system LC), to which the line 14 is connected through a first connector 141, goes to the lamp L, to which the line 14 is connected with a second connector 142.

The core 12 has the function of circumventing the on-board diagnostics by causing the sensors of the BCM of the system LC to see the (LED) lamp L starting from the connector 141 as if it were a traditional halogen lamp.

As is illustrated in Figure 2, the core 12 may comprise a casing 120 made of a material having good features of thermal dissipation (for example, aluminium) that houses an electrical circuit 122. The circuit 122 is configured, according to known criteria, to convert the electrical parameters of the lamp L connected to the connector 142 so that the lamp L will be seen by the sensors of the BCM as if it were, instead of a LED lamp, a traditional lamp (e.g., a halogen lamp).

In Figure 2, the reference 124 designates an interface material. This may, for example, be a material that is in itself electrically insulating, which, however, is able to facilitate transfer of the heat of the circuit 122 to the casing 120, which may be fixed on the body of the vehicle (not visible in the figures).

As has already been said, a CAN-bus system based upon electronic circuits as is illustrated in Figures 1 and 2 may prove limited: for example, such a system may be able to co-operate only with certain types of BCM systems, for example with a pulsed system or else with a current-based system, but not with both types of system.

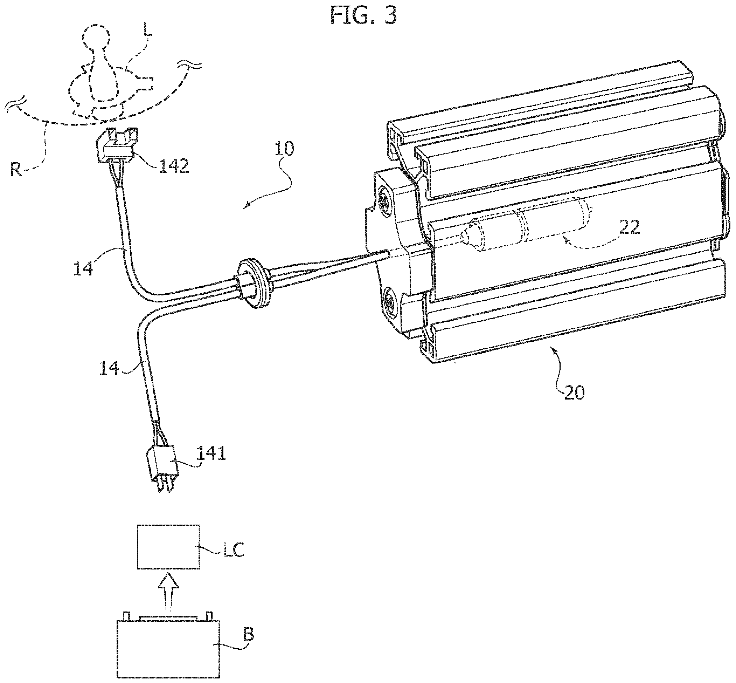

The examples presented in Figure 3 and in the subsequent figures (where, if not otherwise indicated, parts and elements corresponding to parts or elements already discussed in relation to Figures 1 and 2 are designated by corresponding numbers and symbols, without the corresponding description being repeated) envisage replacement of the electronic circuit 122 of the core 12 of Figures 1 and 2.

In particular, in the examples presented in Figure 3 and in the subsequent figures, the core 12 of Figures 1 and 2, comprising the electronic circuit 122, is replaced by a core 20, which comprises a halogen lamp 22 set along the line 14 from electrical supply of the lamp L starting from the source (battery) B and which on the other hand keeps the connectors 141 (supply-source or battery B side) and 142 (lamp L side) unaltered.

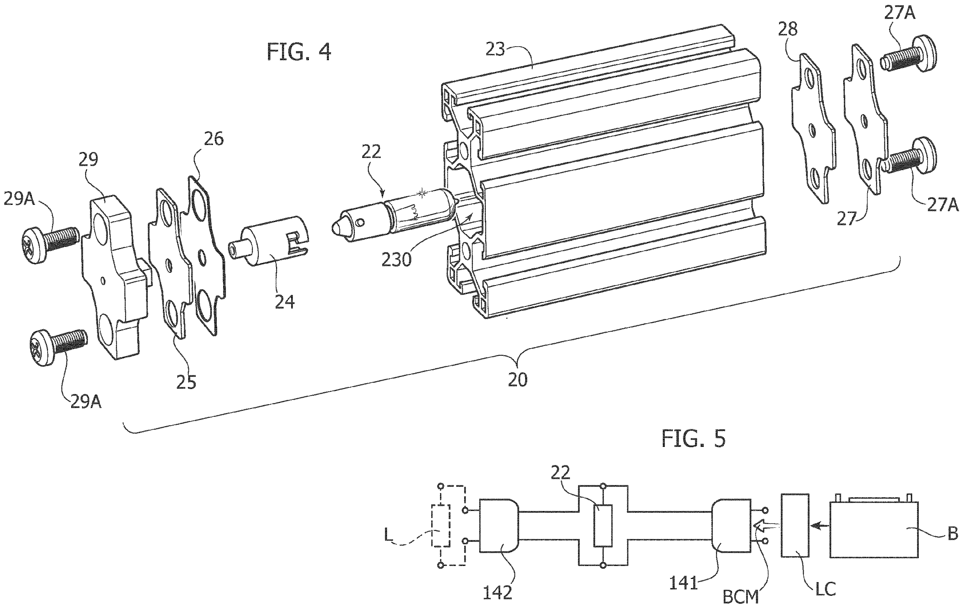

The lamp 22 can be electrically connected in parallel to the lamp L, as schematically illustrated in Figure 5, so that the electrical load Rtot detected by the sensors ???by [?of] the diagnostic module/function (BCM) of the system LC at the connector 141 is given by the overall resistance value Rtot of two resistances set in parallel (Ohm's law), i.e.,

$$\mathtt{Rtot \ = \ (R1 \cdot R2)/(R1 \ + \ R2),}$$

where

    R1 is the resistance of the LED lamp L; and
    R2 is the resistance of the filament lamp 22.

Since, as has been seen, the LED lamp L has a current absorption (much) lower than that of a halogen lamp as the lamp 22, i.e., R1 >> R2, the electrical load Rtot ends up corresponding to that of the filament of the lamp 22, i.e., to the type of load for which the above sensors are designed to function.

Using in the core 20 a halogen lamp such as the lamp 22 it is possible to have a current absorption starting from the supply source B that is basically that of a filament lamp, with the consequent capacity of cooperating with a BCM system both of the pulsed type and of the current-based type.

Using a filament lamp 22 (for example, a lamp 22 that dissipates a power of approximately 15 W, such as an H21W lamp) it is possible to cause the BCM system - whatever it may be (pulsed of current-based) - to interpret the load at the connector 141 as that of a filament lamp, even though the lamp L effectively mounted in the reflector R is a LED lamp.

As is illustrated in the exploded perspective view of Figure 4, the core 20 may advantageously comprise a body or housing 23 made of material that is a good heat conductor (for example, aluminium), possibly finned and/or with an external patterning, with the body or housing 23 that houses the lamp 22 in a longitudinal cavity 230.

For instance, the body or housing 23 may be constituted by a length of sectional element of a material that is a good heat conductor.

As has been seen, the lamp 22 may be a filament halogen lamp, such as an H21W lamp with a filament that dissipates approximately 15 W, carried by a lamp-holder 24, for example configured for bayonet coupling of the lamp 22.

As has been illustrated, the lamp-holder 24 is mounted (e.g., screwed) on a base (plate) 25 made of a material that is a good heat conductor (for example, aluminium), possibly envisaging a lamina 26 made of thermal-interface material.

As has been illustrated, at the end opposite to the end where the lamp 22 is inserted, the housing 23 is closed by a closing plate (e.g., a metal plate) 27.

The plate 27 may be fixed on the housing 23 via screws 27A with the interposition of a sealing element 28 (made , for example, of rubber).

As has been illustrated, following upon insertion of the lamp 22, the housing 23 is closed at the shoulders of the lamp-holder 24 and of the base 25 by a plastic cap 29. The cap 29 can be fixed on the housing 23 via screws 29A.

The solution described, where the housing 23 that houses (in the cavity 230) the filament lamp 22 is a housing impermeable to light having the filament lamp 22 sealingly enclosed (for example, thanks to the lids or caps 27 and 29) in the housing 23 itself, makes it possible to insulate the body 23 (made, for example, of aluminium) from outside, so as to prevent short-circuits.

At the same time it is possible to counter effectively penetration of water and humidity into the cavity 230 where the lamp 22 is located.

The solution described herein is suited to being provided in the form of a retrofit kit comprising an automotive LED lamp configured to be coupled to the second connector 142 in a device 10 as described herein.

The operation of equipping a vehicle originally equipped with filament lamps (for example, halogen lamps) with an automotive LED lamp L may hence envisage mounting of the LED lamp in a corresponding mounting location (for example, the reflector R of a headlight) in a vehicle, substituting it for a filament lamp.

The LED lamp can be coupled to an electrical-supply source (for example, the battery B) in the vehicle via a device 10, as previously described by coupling the first connector 141 to the supply source (control system LC, coming under the battery B) and the second connector 142 to the automotive LED lamp L.

As has already been said, the representation of the figures is deliberately simplified and does not highlight in detail various elements such as the light-control system LC, which supervises (in way in itself known) turning-on and turning-off of the lamp L, control of brightness thereof, etc.

It is hence understood that the LED lamp is coupled, via the connector 141, to the battery B not in a direct way but, in a way in itself widely known, via circuits and components LC that superintend the aforesaid functions.

Without prejudice to the underlying principles, the details of construction and the embodiments may vary, even significantly, with respect to what has been illustrated herein purely by way of non-limiting example, without thereby departing from the sphere of protection, as this is defined by the annexed claims.

### LIST OF REFERENCE SIGNS

| | |
|---|---|
| Device | 10 |
| Electrical supply source | B, LC |
| Battery | B |
| Light-control system | LC |
| Automotive LED lamp | L |
| Mounting location | R |
| Electrical-supply line | 14 |
| First connector | 141 |
| Second connector | 142 |
| Casing | 120 |
| Electrical circuit | 122 |
| Interface material | 124 |
| Filament lamp | 22 |
| Housing | 23 |
| Cavity | 230 |
| Lamp-holder | 24 |
| Base | 25 |
| Thermal-interface lamina | 26 |
| Closing plate | 27 |
| Screws | 27A |
| Sealing element | 28 |
| Cap | 29 |
| Screws | 29A |

**Claims**

1. A device (10), comprising:

   a first connector (141) configured to be coupled to an electrical supply source (B, LC) and a second connector (142) configured to be coupled to an automotive LED lamp (L),
   an electrical supply line (14) between the first connector (141) and the second connector (142), and
   a filament lamp (22) set in said electrical supply line (14) intermediate the first connector (141) and the second connector (142), wherein, with the first connector (141) coupled to the electrical supply source (B, LC), the filament lamp (22) provides an electrical load to the electrical supply source (B, LC).

2. The device (10) of claim 1, wherein the filament lamp (22) is a halogen lamp.

3. The device (10) of claim 1 of claim 2, wherein the filament lamp (22) has a power absorption of about 15W.

4. The device (10) of any of the previous claims, wherein, with the second connector (142) coupled to the automotive LED lamp (L), the filament lamp (22) is arranged electrically in parallel to the automotive LED lamp (L).

5. The device (10) of any of the previous claims, comprising a housing (23) that accommodates the filament lamp (22).

6. The device (10) of claim 5, wherein the housing (23) is a light-impermeable housing having the filament lamp (22) enclosed therein.

7. The device (10) of claim 5 or claim 6, wherein the filament lamp (22) is sealingly (27, 29) enclosed in the housing (23).

8. The device (10) of any of claims 5 to 7, wherein the housing (23) is a heat-dissipative housing.

9. A kit, comprising:

   a device (10) according to any of claims 1 to 8, and
   an automotive LED lamp (L) configured to be coupled to the second connector (142) in said device (10).

10. A method of equipping a vehicle with an automotive LED lamp (L), the method comprising:

mounting the automotive LED lamp (L) onto a mounting location (R) in the vehicle, and coupling the automotive LED lamp (L) to an electrical supply source (B, LC) in the vehicle via a device (10) according to any of claims 1 to 8, coupling the first connector (141) to said electrical supply source (B, LC) and the second connector (142) to the automotive LED lamp (L).

FIG. 1

FIG. 2

EP 4 106 496 A1

FIG. 3

FIG. 4

27A
27A
27
28
23
230
22
20
24
26
25
29
29A
29A

FIG. 5

B
LC
BCM
141
142
22
L

Europäisches
Patentamt
European
Patent Office
Office européen
des brevets

# EUROPEAN SEARCH REPORT

**Application Number**

EP 22 17 6173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2006 018308 A1 (HELLA KGAA HUECK & CO [DE]) 31 October 2007 (2007-10-31) * paragraph [0025] – paragraph [0026]; figure 1 * | 1-10 | INV. H05B45/3574 B60Q11/00 H05B47/20 |
| Y | US 2003/227257 A1 (SERIZAWA TOMOAKI [JP] ET AL) 11 December 2003 (2003-12-11) * paragraph [0021] – paragraphs [0028], [0031], [0035], [0062]; figures 1-2 * | 1-10 | |
| X | US 2008/225538 A1 (LYNAM NIALL R [US] ET AL) 18 September 2008 (2008-09-18) * paragraph [0084] – paragraphs [0085], [0101]; figures 3A, 3B, 4 * | 1,9 | |
| X | US 6 124 886 A (DELINE JONATHAN E [US] ET AL) 26 September 2000 (2000-09-26) * column 9, line 58 – line 63; figure 5 * | 1,9 | |

**TECHNICAL FIELDS SEARCHED (IPC)**

B60Q
H05B

The present search report has been drawn up for all claims

| Place of search | Date of completion of the search | Examiner |
|---|---|---|
| Munich | 31 October 2022 | Erskine, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 6173

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2022

| Patent document cited in search report | Publication date | Patent family member(s) | Publication date |
|---|---|---|---|
| DE 102006018308 A1 | 31-10-2007 | NONE | |
| US 2003227257 A1 | 11-12-2003 | DE 10323437 A1 | 08-01-2004 |
| | | FR 2841430 A1 | 26-12-2003 |
| | | JP 2004009825 A | 15-01-2004 |
| | | US 2003227257 A1 | 11-12-2003 |
| US 2008225538 A1 | 18-09-2008 | AT 363413 T | 15-06-2007 |
| | | AU 2002251807 A1 | 19-08-2002 |
| | | DE 60220379 T2 | 24-01-2008 |
| | | EP 1363810 A2 | 26-11-2003 |
| | | ES 2287266 T3 | 16-12-2007 |
| | | US 2002159270 A1 | 31-10-2002 |
| | | US 2007109807 A1 | 17-05-2007 |
| | | US 2008186724 A1 | 07-08-2008 |
| | | US 2008225538 A1 | 18-09-2008 |
| | | US 2010045790 A1 | 25-02-2010 |
| | | US 2012086808 A1 | 12-04-2012 |
| | | US 2014226009 A1 | 14-08-2014 |
| | | US 2016264052 A1 | 15-09-2016 |
| | | US 2017297490 A1 | 19-10-2017 |
| | | WO 02062623 A2 | 15-08-2002 |
| US 6124886 A | 26-09-2000 | DE 69826945 T2 | 09-02-2006 |
| | | EP 0899157 A1 | 03-03-1999 |
| | | US 6124886 A | 26-09-2000 |
| | | US 6386742 B1 | 14-05-2002 |
| | | US 2002191409 A1 | 19-12-2002 |
| | | US 2004145904 A1 | 29-07-2004 |
| | | US 2005141230 A1 | 30-06-2005 |
| | | US 2006268561 A1 | 30-11-2006 |
| | | US 2007268711 A1 | 22-11-2007 |
| | | US 2008089081 A1 | 17-04-2008 |
| | | US 2009103183 A1 | 23-04-2009 |
| | | US 2010091509 A1 | 15-04-2010 |
| | | US 2011169956 A1 | 14-07-2011 |
| | | US 2012113495 A1 | 10-05-2012 |
| | | US 2013016217 A1 | 17-01-2013 |
| | | US 2014015976 A1 | 16-01-2014 |
| | | US 2015124071 A1 | 07-05-2015 |

EPO FORM P0459

For more details about this annex : see Official Journal of the European Patent Office, No. 12/82